**Europäisches Patentamt**

**European Patent Office**

**Office européen des brevets**

(19)

(11) Numéro de publication : **0 296 900 B1**

(12)

# FASCICULE DE BREVET EUROPEEN

(45) Date de publication du fascicule du brevet :
**09.10.91 Bulletin 91/41**

(51) Int. Cl.⁵ : **F16H 3/74**

(21) Numéro de dépôt : **88401217.0**

(22) Date de dépôt : **19.05.88**

(54) **Système de contrôle de la vitesse de sortie d'un convertisseur de couple à deux différentiels.**

(30) Priorité : **22.06.87 FR 8708711**

(43) Date de publication de la demande :
**28.12.88 Bulletin 88/52**

(45) Mention de la délivrance du brevet :
**09.10.91 Bulletin 91/41**

(84) Etats contractants désignés :
**DE ES FR GB IT**

(56) Documents cités :
**BE-A- 620 738**
**CH-A- 123 201**
**CH-A- 191 391**
**GB-A- 473 677**

(73) Titulaire : **Combastet, Michel**
**25, rue du Faubourg Saint-Honoré**
**F-75008 Paris (FR)**

(72) Inventeur : **Combastet, Michel**
**25, rue du Faubourg Saint-Honoré**
**F-75008 Paris (FR)**

(74) Mandataire : **Armengaud Ainé, Alain**
**Cabinet ARMENGAUD AINE 3 Avenue**
**Bugeaud**
**F-75116 Paris (FR)**

## Description

La présente invention concerne un convertisseur de couple mécanique du type à différentiels.

Depuis plus de quarante ans, on a étudié des convertisseurs de couple conçus de façon à remplacer les boîtes de vitesses classiques constituées de jeux d'engrenages. En effet, les convertisseurs de couple présentent l'avantage d'utiliser au maximum les performances d'un moteur en maintenant ce dernier plus longtemps au régime où il donne son couple maximum. A l'heure actuelle, la plupart des convertisseurs de couple utilisés dans l'industrie automobile sont des convertisseurs hydrauliques et mécaniques.

Le présent titulaire a été amené il y a quelques années à étudier et mettre au point un nouveau convertisseur de couple simple, robuste, d'un prix raisonnable et d'un entretien facile. Un tel convertisseur de couple, qui est de type mécanique, est décrit d'une part dans le brevet français numéro 2327454 et son certificat d'addition numéro 2450385 et d'autre part dans le brevet français numéro 2597945. Ces convertisseurs de couple originaux agissent par rétroaction différentielle et ils se composent de deux différentiels associés de façon que la cage, à l'entrée du premier différentiel, reçoive la puissance à transmettre et que la cage à la sortie du second différentiel entraîne l'organe récepteur, les deux différentiels ayant leurs cages entraînées par les planétaires accouplés deux par deux, par deux trains d'engrenages, l'un d'un côté et le deuxième de l'autre côté.

Dans les brevets français mentionnés ci-dessus, aucune disposition particulière n'a été décrite en ce qui concerne la prévision et le contrôle des variations effectives des rapports effectifs de vitesses d'entrée et de sortie.

On connaît par ailleurs par le document BE-A-620738 un dispositif à variation automatique et continue du rapport de transmission qui consiste à accoler entre eux deux différentiels à l'aide d'une liaison directe entre les planétaires. Ce dispositif connu prévoit d'intercaler à l'intérieur d'un tel mécanisme un élément pouvant servir soit de frein soit d'impulseur à l'un des deux groupes du dispositif, cet élément pouvant être réalisé sous la forme d'un volant à moment d'inertie variable. L'expérience démontre qu'un tel mécanisme ne permet pas d'obtenir le contrôle et la loi d'équilibre automatique des vitesses et des accélérations désirées, sous l'effet d'une impulsion connue dans un système convertisseur de couple du type objet de la présente invention.

En conséquence, la présente invention se propose d'apporter des perfectionnements à de tels convertisseurs de couple mécaniques agissant par rétroaction différentielle et elle est relative à un mode de calcul et de réalisation d'un système de contrôle de la valeur de sortie maximale d'un tel convertisseur.

Dans un tel convertisseur de couple mécanique, les paramètres de construction peuvent permettre d'obtenir un champ bien déterminé de rapport de vitesses et de conditions d'accélération permettant ainsi de concevoir et de réaliser un convertisseur particulièrement bien adapté à l'application choisie. En effet, un convertisseur constitué par la combinaison de deux différentiels conformément aux dispositions décrites dans les brevets mentionnés ci-dessus, mais dépourvu des moyens de contrôle qui font l'objet de la présente invention, fonctionne certes, mais le champ de ses performances est singulièrement réduit tant du point de vue de la puissance transmise que du point de vue de l'intervalle qui sépare les rapports extrêmes de vitesses et d'accélérations obtenus.

Dans le cas de la réalisation d'un convertisseur mécanique à différentiels selon les brevets mentionnés ci-dessus, les démultiplications assurant les liaisons entre les deux différentiels associés sont construites sans autre contrainte que celles qui consistent dans la définition des modules et dans la détermination des matériaux nécessaires à la solidité du système de transmission réalisé. Pour obtenir les performances recherchées et mentionnées ci-dessus, l'expérience montre qu'il est nécessaire de prévoir en outre des moyens contrôlant les réactions dynamiques du groupe de pignons ou roues dentées intermédiaires c'est à dire des planétaires et des satellites du système. Selon l'invention, ces moyens sont basés sur le principe qui consiste à définir les moments d'inertie relatifs des pignons ou roues dentées homologues du groupe intermédiaire et plus particulièrement les planétaires et les engrenages du différentiel d'entrée de la puissance, dans le but d'atteindre la vitesse de sortie maximale, compatible avec une puissance d'entrée déterminée.

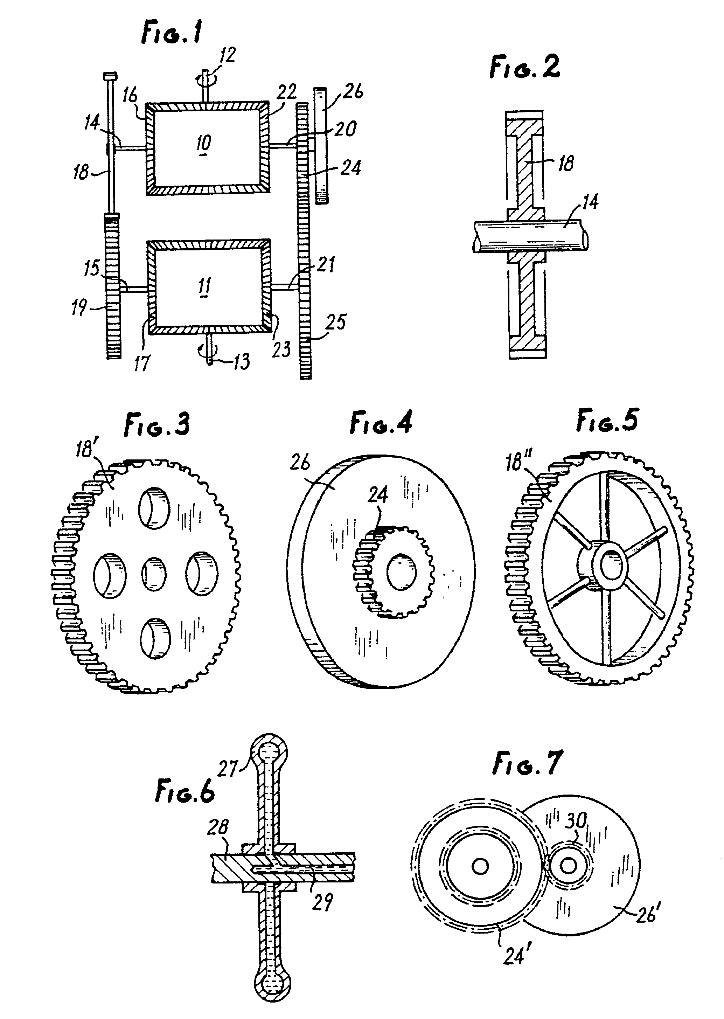

Pour mieux faire comprendre les perfectionnements objets de l'invention, il convient tout d'abord de rappeler la constitution d'un convertisseur tel que décrit dans les brevets mentionnés ci-dessus. Un tel convertisseur a été représenté de façon schématique sur la figure 1 des dessins annexés.

Les références 10 et 11 désignent les deux différentiels dont la combinaison particulière constitue le convertisseur de couple mécanique selon l'invention. L'arbre d'entrée 12 solidaire de la cage du premier différentiel 10 reçoit la puissance à transmettre et l'arbre de sortie 13 solidaire de la cage du second différentiel 11 entraîne l'organe récepteur. Les arbres 14 et 15, conduits respectivement par les planétaires 16 et 17 des premier et second différentiels, sont accouplés par l'intermédiaire de deux engrenages ou trains d'engrenages 18 et 19 présentant entre eux un rapport déterminé M de surmultiplication. Les arbres 20 et 21 des planétaires 22 et 23, respectivement des différentiels 10 et 11, sont accouplés par l'intermédiaire de deux engrenages ou trains d'engrenages 24 et 25 de rapport de démultiplication N également déterminé et tel que $N < M$.

En fonctionnement, lorsque l'arbre d'entrée 12 reçoit la puissance à transmettre (vitesse $V_E$, couple $C_E$) les deux différentiels ainsi accouplés équilibrent le couple $C_S$ et la vitesse $V_S$ sur l'arbre de sortie 13 afin de vaincre le couple résistant de l'organe récepteur. On obtient donc ainsi une variation de la vitesse $V_S$ conjuguée à une variation en sens inverse du couple $C_S$ sans que la vitesse d'entrée $V_E$ et le couple d'entrée $C_E$ varient, en vérifiant la relation nécessaire: $V_S \times C_S = V_E \times C_E$.

On comprend que le mouvement des deux planétaires 16 et 17 s'équilibre dynamiquement lorsque les deux forces du couple qui agissent aux points de contact du satellite d'entraînement solidaire de l'arbre 12 avec le planétaire 16 et du planétaire 17 avec le satellite entraîné et solidaire de l'arbre de sortie 13, sont égales. Dans ce cas, et dans ce cas seulement, les deux vitesses de rotation des roues de la démultiplication sont constantes et, simultanément, soit le satellite ne tourne pas, soit il est entraîné à vitesse constante.

Les forces du couple moteur qui sont appliquées aux voies planétaires 16-17 et 22-23 communiquent à chacune de ces voies une accélération qui permet à chaque ensemble planétaire d'atteindre une certaine vitesse qui dépend d'une part de la charge résistante sur l'arbre de sortie et, d'autre part, de l'inertie de sa roue planétaire, de son arbre et de sa roue de démultiplication qui est, elle aussi, solidaire de l'arbre planétaire. Enfin, il faut tenir compte également de l'inertie de toute roue ou masse entraînée en aval du même planétaire, afin de calculer l'équilibre des vitesses demandées.

On sait que le poids des roues standard est sensiblement proportionnel au cube de leur diamètre, dans une série déterminée. Dans ce cas, il est clair que le montage des roues de démultiplication qui réalise la liaison entre les deux différentiels 10 et 11 est tel que la roue de grand diamètre 18 ou roue de surmultiplication de rapport M (grand rapport), située du côté de ce qu'il convient d'appeler la voie de vitesse du système est plus lourde que la roue de petit diamètre 24 ou roue de démultiplication de rapport N (petit rapport) située sur l'arbre du planétaire 22 qui constitue le côté appelé voie du couple. Par conséquent, l'inertie de la roue 24 côté voie de couple est plus faible que l'inertie de la roue 18 côté voie de vitesse et cette roue sollicitée par le moment moteur subira donc une accélération plus importante que celle à laquelle est soumise la roue lourde 18 située côté vitesse.

Or, la théorie dynamique d'un tel convertisseur à différentiels montre que la plus grande vitesse de sortie possible s'obtient lorsque la charge résistante de sortie est nulle et que les deux planétaires du différentiel d'entrée 10 tournent à la même vitesse que la cage de ce différentiel d'entrée. Lorsque la charge résistante de sortie est élevée, comme la vitesse de sortie résultant de la répartition du mouvement d'entrée est relativement faible et qu'elle peut même être très proche de la vitesse minimale théorique, un tel convertisseur perd alors la plus grande partie de son champ de performance théorique.

Ainsi, lorsque le rapport des vitesses atteint une certaine valeur, les forces du couple moteur sur le satellite d'entraînement s'égalisent et les deux planétaires 16 et 17 tournent à des vitesses constantes. Comme la répartition des vitesses résulte de l'inertie des roues intermédiaires, il suffit de calculer le rapport des poids de chaque paire de roue homologues de telle sorte que leurs moments d'inertie engendre la fonction d'inertie souhaitée.

A titre indicatif le mode de calcul comporte :
1) l'évaluation de l'accélération de la grande roue et de la petite roue dans leur état naturel pour une impulsion connue ;
2) l'évaluation de l'allègement de la grande roue et de l'alourdissement de la petite roue pour arriver à l'égalité des moments d'inertie ;
3) à ce stade il faut évaluer expérimentalement les pertes de fonctionnement en charge dues au frottement et en déduire le complément (positif ou négatif) du moment d'inertie de chaque roue ;
4) une nouvelle évaluation d'allègement et d'alourdissement tenant compte d'une part des pertes par frottement et d'autre part du complément de l'accélération conféré à la grande roue pour que le rapport des vitesses d'entrée et de sortie ait tendance à se rapprocher de la vitesse nomminale de sortie Vs lorsque le couple d'entrée et le couple de sortie sont égaux, ou approximativement égaux, telle que

$$Vs = V_E \times \frac{M + N}{2}$$

$V_E$, étant la vitesse à l'entrée, M étant le rapport de surmultiplication et N étant le rapport de démultiplication.

Il est tenu compte pour l'ajustement des paramètres de la nervosité souhaitée (c'est à dire de la quantité d'accélération par unité de temps). Ainsi on obtient les moments d'inertie convenables permettant d'engendrer la dynamique et l'équilibre des vitesses souhaité.

La présente invention concerne donc un système convertisseur de couple mécanique agissant par rétroaction différentielle, comportant deux différentiels associés montés sur des axes parallèles, la cage du premier différentiel recevant la puissance de l'arbre d'entrée du mouvement moteur et la cage du second différentiel entraînant l'arbre de sortie du système, les deux différentiels ayant leurs quatre planétaires accouplés deux par deux, ce système convertisseur de couple étant caractérisé en ce que le moment d'inertie de la roue, assurant la démultiplication de rapport N du groupe planétaire côté voie de couple, est augmenté par rapport au moment d'inertie de la roue de surmultiplication de rapport M du groupe planétaire, côté voie de vitesse, de manière à inverser le rapport des moments d'inertie de la roue de surmultiplication et de la roue de démultiplication, ce qui permet d'obtenir le contrôle et la loi d'équilibre automatique des vitesses et des accélérations désiré, sous l'effet d'une impulsion connue.

Selon l'invention, le moment d'inertie et donc le poids des roues desdits planétaires peut être ajusté soit par allègement, soit par alourdissement, soit par addition d'une roue d'inertie, liée à des arbres planétaires, soit encore par simulation d'un effet d'inertie en vue d'obtenir les moments d'inertie recherchés.

D'autres caractéristiques et avantages de la présente invention ressortiront de la description faite ci-après en référence au dessin annexé qui illustre à titre d'exemples non limitatifs divers modes de réalisation de l'invention. Sur le dessin :

La figure 1 représente un convertisseur de couple mécanique selon les brevets mentionnés ci-dessus muni du perfectionnement selon l'invention et Les figures 2 à 8 sont des vues schématiques représentant divers exemples de réalisation des roues des planétaires du différentiel d'entrée du convertisseur illustré par la figure 1, ces roues ayant été soit allégées (figures 2, 3 et 5), soit alourdies par divers moyens décrits ci-après (figures 4, 6, 7 et 8).

Ainsi qu'on peut le voir sur la figure 1, dans cet exemple de réalisation non limitatif, la grande roue 18 de surmultiplication de rapport M du groupe planétaire côté vitesse du différentiel d'entrée 10 a été allégé par amincissement de la plus grande partie de son flasque. Cette roue 18 est représentée en coupe verticale et à échelle agrandie sur la figure 2. Sur ce même exemple de réalisation de l'invention illustré par la figure 1, la petite roue 24 de démultiplication de rapport N du groupe planétaire de ce différentiel d'entrée 10 est accolée à un volant 26 dont la forme et le choix des matériaux permettent d'obtenir le supplément de moment d'inertie déterminés par le calcul. L'ensemble petite roue 24 et volant d'inertie 26 a été représenté à plus grande échelle et en perspective sur la figure 4.

On peut bien entendu envisager d'autres solutions permettant de déterminer le poids de chaque roue et d'obtenir ce poids en vue de l'obtention des moments d'inertie permettant d'engendrer l'équilibre des vitesses souhaité.

Sur l'exemple de réalisation illustré en perspective par la figure 3, la grande roue 18' du groupe planétaire côté vitesse a été allégée par forge de trous dans son flasque et dans l'exemple de réalisation illustré en perspective sur la figure 5, cet allègement de la grande roue 18" a été obtenu en réalisant ces trous sous la forme d'un pignon à rayons.

En ce qui concerne l'alourdissement de la petite roue 24 du groupe planétaire côté couple, celui-ci peut être réalisé à l'aide d'un volant doté d'un moyen d'accouplement et de désaccouplement sur la petite roue, ce moyen d'accouplement et de désaccouplement pouvant être du type mécanique, hydraulique, ou électromagnétique. Dans l'exemple de réalisation illustré par la figure 7, on a prévu un engrenage supplémentaire 30 en prise sur la petite roue de démultiplication 24' (côté voie couple), ces deux pignons présentant un rapport déterminé et faisant tourner un volant d'inertie 26' assurant la régulation de l'équilibre.

Dans l'exemple de réalisation illustré par la figure 6 qui représente en coupe verticale un volant devant être associé à la petite roue de démultiplication 24 (figure 1), ce volant 27 a été réalisé sous la forme d'un flasque creux pouvant contenir un liquide (eau, huile, mercure, etc.) qui est délivré par l'intermédiaire d'un canal d'allimentation 29 disposé selon l'axe de l'arbre de rotation 28, ce qui permet de modifier l'effet d'inertie du volant ainsi réalisé, soit naturellement par l'action de la force centrifuge, plaquant le liquide vers l'extérieur, soit par l'intermédiaire de clapets contrôlant la distribution du fluide sous pression admis dans le volant creux 27 ainsi réalisé.

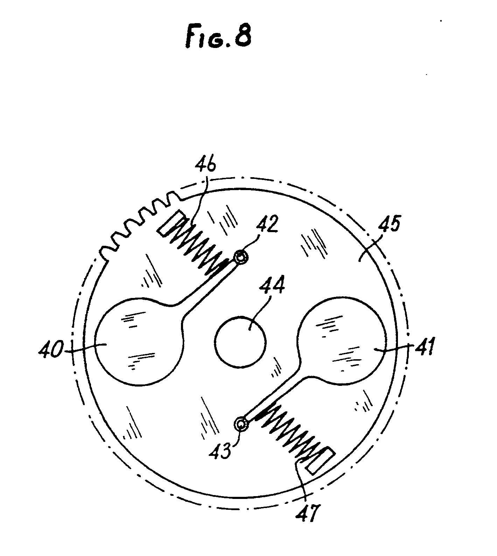

On peut aussi modifier le moment d'inertie d'une roue planétaire par le déplacement radial de masselottes 40 et 41 (voir la figure 8), articulées sur des axes de rotation 42 et 43 solidaires de l'arbre planétaire 44 par l'intermédiaire d'un disque 45, servant de support. Le rappel vers le centre est assuré, par exemple par des ressorts 46 et 47.

Il est naturellement possible d'envisager toute autre solution permettant de modifier le moment d'inertie de la grande roue 18 et celui de la petite roue 24. C'est ainsi que, par exemple, on peut utiliser un moteur accélérant la vitesse de la grande roue 18 coté vitesse, par simulation d'une roue allégée et que l'on peut utiliser un frein ralentissant la vitesse de la petite roue 24 côté couple de manière à simuler une roue alourdie.

## Revendications

1. Système convertisseur de couple mécanique agissant par rétroaction différentielle, comportant deux différentiels associés (10, 11) montés sur des axes parallèles, la cage du premier différentiel (10) recevant la puissance de l'arbre d'entrée (12) du mouvement moteur et la cage du second différentiel (11) entraînant l'arbre de sortie (13) du système, les deux différentiels ayant leurs quatre planétaires (16, 17, 22, 23) accouplés deux par deux, ce système convertisseur de couple étant caractérisé en ce que le moment d'inertie de la roue (24, 24'), assurant la démultiplication de rapport (N) du groupe planétaire côté voie de couple (22, 23), est augmenté par rapport au moment d'inertie de la roue (18, 18', 18") de surmultiplication de rapport (M ; N < M) du groupe planétaire, côté voie de vitesse (16, 17), de manière à inverser le rapport des moments d'inertie de la roue de surmultiplication et de la roue de démultiplication, ce qui permet d'obtenir le contrôle et la loi d'équilibre automatique des vitesses et des accélérations désirées, sous l'effet d'une impulsion connue.

2. Système convertisseur de couple selon la revendication 1, caractérisé en ce que l'on diminue le moment d'inertie de la roue (18) de surmultiplication du groupe planétaire, côté voie de la vitesse, du différentiel d'entrée (10) par amincissement de la plus grande partie de son flasque.

3. Système convertisseur de couple selon la revendication 1, caractérisé en ce que l'on diminue le moment d'inertie de la roue (18') de surmultiplication du groupe planétaire côté voie de la vitesse par forge de trous dans son flasque.

4. Système convertisseur de couple selon la revendication 1, caractérisé en ce que l'on diminue le moment d'inertie d'une roue de surmultiplication côté voie de la vitesse en réalisant cette roue sous la forme d'une roue (18") à rayons.

5. Système convertisseur de couple selon l'une quelconque des revendications précédentes caractérisé en ce que l'on augmente le moment d'inertie d'une roue (24) de démultiplication du groupe planétaire du différentiel d'entrée côté voie de couple en accolant cette roue à un volant (26) dont la forme et le choix des matériaux permettent d'obtenir le supplément de moment d'inertie voulu.

6. Système convertisseur de couple selon l'une quelconque des revendications précédentes caractérisé en ce que l'on augmente le moment d'inertie d'une roue de démultiplication (24) du groupe planétaire côté voie de couple à l'aide d'un volant muni de moyens d'accouplement et de désaccouplement (30), pouvant être mécaniques, hydrauliques, pneumatiques ou électromagnétiques.

7. Système convertisseur de couple selon la revendication 6 caractérisé en ce que l'on prévoit un engrenage supplémentaire (30) en prise sur une roue de démultiplication (24') côté voie de couple, ces deux pignons (24', 30) présentant un rapport déterminé et faisant tourner le volant d'inertie (26') qui contribue à la régulation de l'équilibre.

## Patentansprüche

1. Mechanische Drehmomentübersetzungsvorrichtung durch differentielle Rückkoppelung, mit zwei auf parallelen Achsen montierten verbundenen Differentialen (10, 11), wobei das Gehäuse des ersten Differentials (10) die Kraft der Eingangswelle (12) der Motorbewegung aufnimmt, das Gehäuse des zweiten Differentials (11) die Ausgangswelle (13) des Systems antreibt und die vier Planetenräder (16, 17, 22, 23) der zwei Differentiale jeweils zu zweien gekoppelt sind. dadurch **gekennzeichnet**, daß das Trägheitsmoment des Rades (24, 24'), das das Untersetzungsverhältnis (N) der momentseitigen Planetenradgruppe (22, 23) erzeugt, auf der Geschwindigkeitsseite (16, 17) in Bezug auf das Trägheitsmoment des Übersetzungsrades (18, 18', 18") mit dem Verhältnis (M ; N < M) der Planetenradgruppe so erhöht wird, daß das Verhältnis der Drehmomente des Übersetzungs- und Untersetzungsrades invertiert wird, so daß es möglich ist, die Kontrolle und den automatischen Gleichgewichtsverlauf der gewünschten Geschwindigkeiten und Beschleunigungen unter Einwirken eines bekannten Antriebs zu erhalten.

2. Vorrichtung nach Anspruch 1, dadurch **gekennzeichnet**, daß das Trägheitsmoment des Übersetzungsrades (18) der Planetenradgruppe des Eingangsdifferentials (10) auf der Geschwindigkeitsseite durch Verdünnung des größten Teils seines Flansches verringert ist.

3. Vorrichtung nach Anspruch 1, dadurch **gekennzeichnet**, daß das Trägheitsmoment des geschwindigkeitsseitigen Übersetzungsrades (18') der Planetenradgruppe durch Bohren von Löchern in seinem Flansch verringert ist.

4. Vorrichtung nach Anspruch 1, dadurch **gekennzeichnet**, daß das Trägheitsmoment eines geschwindigkeitsseitigen Übersetzungsrades durch dessen Ausbildung als Speichenrad (18") verringert ist.

5. Vorrichtung nach einem der vorhergehenden Ansprüche, dadurch **gekennzeichnet**, daß das Trägheitsmoment eines Untersetzungsrades (24) der Planetenradgruppe des momentseitigen Eingangsdifferentials durch Ankuppeln dieses Rades an ein Schwungrad (26) erhöht ist, dessen Form und Materialzusammensetzung das Hinzufügen des gewünschten Drehmoments erlauben.

6. Vorrichtung nach einem der vorhergehenden Ansprüche, dadurch **gekennzeichnet**, daß das Trägheitsmoment eines Untersetzungsrades (24) der momentseitigen Planetenradgruppe mit Hilfe eines Schwungrades vergrößert ist, das mechanische, hydraulische, pneumatische oder elektromagnetische Mittel zur Koppelung und Entkoppelung (30) aufweist.

7. Vorrichtung nach Anspruch 6, dadurch **gekennzeichnet**, daß ein zusätzliches Räderwerk (30) in Eingriff mit einem der momentseitigen Untersetzungsräder (24') vorgesehen ist, wobei diese zwei Zahnräder (24',30) ein festes Verhältnis aufweisen und das zur Regelung des Gleichgewichts beitragende Schwungrad (26') drehen.

**Claims**

1. Mechanical torque converter system acting via a differential retroaction comprising two differential gears (10, 11) mounted on parallel axis, the cage of the first differential gear (10) receiving the power from the engine motion input shaft (12) and the cage of the second differential gear (11) driving the output shaft (13) of the system, the two differential gears having their planetaries (16, 17, 22, 23) coupled two-by-two, said torque converter system being characterized in that the moment of inertia of the wheel (24, 24') assuring the reduction of ratio N of the side gear group on the torque path side (22, 23), is increased with respect to the moment of inertia of the wheel (18, 18', 18") assuring the overdrive of ratio (M ; N < M) of the side gear group, on the speed path side (16, 17) in order to reverse the ratio of the moment of inertia of the overdrive wheel and of the reduction wheel, which allows for the control and the law of automatic equilibrium of the desired speeds and acceleration, under the effect of a known impulse.

2. Torque converter system according to claim 1 characterized in that the reduction of the moment of inertia of the overdrive wheel (18) of the side gear group, on the speed path side of the input differential gear, is obtained by thinning out the largest portion of its web.

3. Torque converter system according to claim 1 characterized in that the reduction of the moment of inertia of the overdrive wheel (18') of the side gear group, on the speed path side, is obtained by drilling holes in its web.

4. Torque converter system according the claim 1 characterized in that the reduction of the moment of inertia of an overdrive wheel, on the speed path side, is obtained by using a wheel (18") provided with spokes.

5. Torque converter system according to any of the preceeding claims characterized in that the increasing of the moment of inertia of a reduction wheel (24) of the side gear group, on the torque path side, is obtained by coupling said wheel to a fly wheel (26) having a shape and made of a material providing the desired additional inertia moment.

6. Torque converter system according to any of the preceeding claims characterized in that the increasing of the moment of inertia of a reduction wheel (24) of the side gear group, on the torque path side, is obtained by means of a fly wheel provided with coupling and uncoupling means (30) which can be of the mechanical, hydraulic, pneumatic or electromagnetic type.

7. Torque converter system according to claim 6 characterized in that it includes an extra gear (30) in mesh with the reduction wheel (24'), on the torque path side, said two pinions (24', 30) having a determined ratio and rotating the inertia fly wheel (26')

which is provided for the regulation of the equilibrium.

Fig.1

Fig.2

Fig.3

Fig.4

Fig.5

Fig.6

Fig.7

# Fig.8